# EUROPÄISCHE PATENTSCHRIFT

(11) **EP 0 491 977 B1**
(45) Veröffentlichungstag und Bekanntmachung des Hinweises auf die Patenterteilung: **08.06.1994**
(21) Anmeldenummer: 90125291.6
(22) Anmeldetag: 21.12.1990
(51) Int. Cl.: G01V 5/00

(54) **Prüfanlage für die Ladung von Fahrzeugen**
Testing system for vehicle loads
Système de contrôle pour la charge d'un véhicule

(43) Veröffentlichungstag der Anmeldung: 01.07.1992
(73) Patentinhaber: Heimann Systems GmbH & Co. KG, D-65020 Wiesbaden (DE); FREDENHAGEN KG, D-63069 Offenbach (DE)
(72) Erfinder: Hoppert, Werner, W-6096 Raunheim (DE); Kirsten, Erwin, Dipl.-Ing. (FH), W-6507 Ingelheim (DE)

(56) Entgegenhaltungen:
- EP-A- 0 193 786
- FR-A- 1 433 529

## Beschreibung

Die Erfindung betrifft eine Prüfanlage für die Ladung von Fahrzeugen mit einem Strahler für ein fächerförmiges Strahlenbündel auf einer Seite und einer Zeile von einzelnen Detektoren auf der anderen Seite einer Transportvorrichtung für die Fahrzeuge, sowie mit einer Elektronik zur Verarbeitung der Detektorsignale mit einem Sichtgerät für die bildliche Wiedergabe der Ladung.

Eine Prüfanlage dieser Art dient zum Überprüfen des Inhaltes der Ladung auf nicht zugelassene Bestandteile. Diese Überprüfung kann in der Weise erfolgen, daß die Ladung in einem auf dem Fahrzeug gelagerten Container untergebracht wird, der mit Hilfe von Transportrollen durch die Prüfanlage befördert und hinterher wieder auf das Fahrzeug gestellt wird. Dies bedeutet jedoch einen erheblichen konstruktiven Aufwand für das Entfernen des Containers vom Fahrzeug, dessen Transport und dessen Wiederaufstellen auf das Fahrzeug. Dadurch ergibt sich auch eine relativ lange Prüfzeit.

In der EP-A-0 193 786 ist eine Prüfanlage dieser Art beschrieben. In der FR-A-1 433 529 ist eine Autowaschanlage mit einem auf dem Boden des Aufstellungsraumes verfahrbaren Wagen für das zu waschende Auto dargestellt, der sich zum Transport von Lastwagen mit Containern durch eine Prüfanlage nicht eignet.

Der Erfindung liegt die Aufgabe zugrunde, eine Prüfanlage der eingangs genannten Art so auszubilden, daß mit geringem konstruktivem Aufwand eine schnelle Untersuchung des Inhaltes der Ladung von Fahrzeugen möglich ist. Diese Aufgabe ist erfindungsgemäß gelöst durch die Merkmale des Patentanspruches 1.

Bei der erfindungsgemäßen Prüfanlage können die Fahrzeuge, insbesondere Lastkraftwagen, an einem Radpaar angehoben und im Leerlauf durch die Prüfanlage transportiert werden, wobei die Ladung untersucht wird. Ein Abnehmen eines Containers mit der Ladung ist nicht erforderlich.

Die Erfindung ist nachfolgend anhand eines in der Zeichnung dargestellten Ausführungsbeispieles näher erläutert. Es zeigen:
- Fig. 1: einen Längsschnitt durch die wesentlichen Teile einer Prüfanlage nach der Erfindung, und
- Fig. 2: die Transportvorrichtung der Prüfanlage gemäß Fig. 1 im Querschnitt.

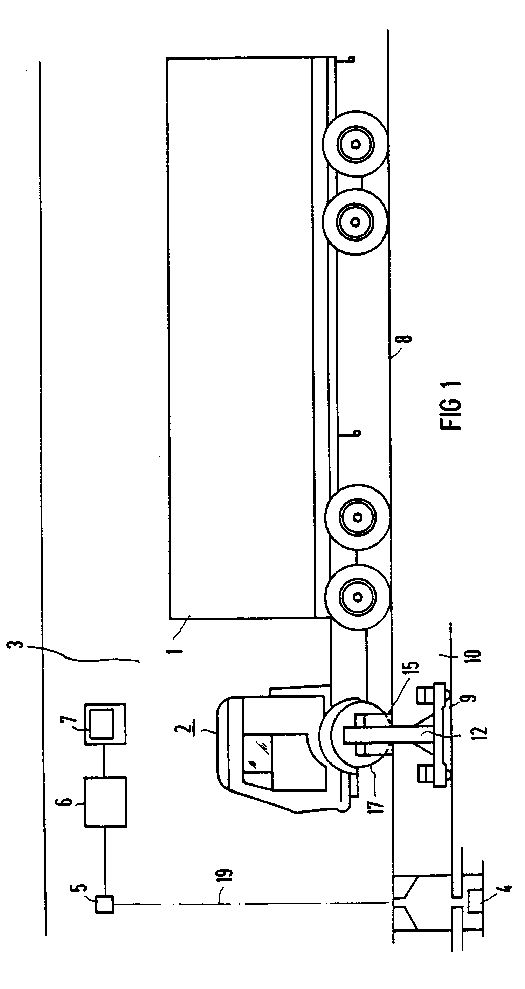

In der Fig. 1 ist eine Prüfanlage für die Ladung 1 eines Fahrzeuges 2 dargestellt, die an einem Tunnel 3 einen Strahler 4 für durchdringende Strahlung und eine senkrecht zur Transportvorrichtung liegende Zeile 5 aus einzelnen Detektoren aufweist. Der Strahler 4 sendet ein fächerförmiges Strahlenbündel 19 aus, das von der Zeile 5 erfaßt wird. Die Detektorsignale werden einer Elektronik 6 zugeführt, der ein Sichtgerät 7 zugeordnet ist, auf dem die Ladung bildlich wiedergegeben wird.

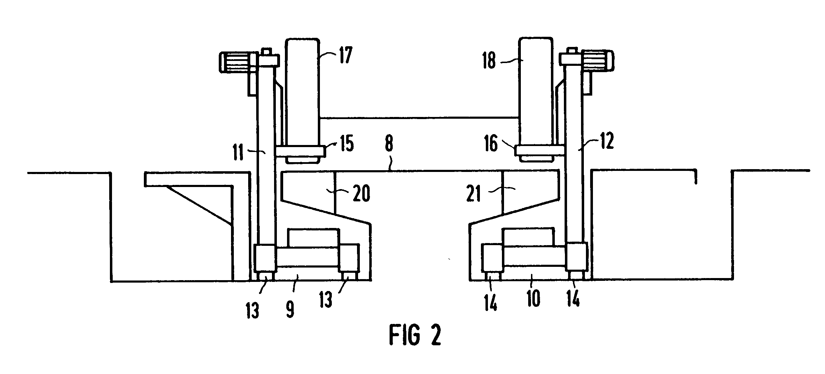

Unter der Lauffläche 8 für das Fahrzeug 2 sind Kanäle 9, 10 vorgesehen (Fig. 2), in denen zwei Hubwagen 11, 12 auf Schienen 13, 14 längsverschiebbar sind. Die Hubwagen 11, 12 besitzen motorisch heb- und senkbare Greifer 15, 16 für die einander gegenüberliegenden Räder des Fahrzeuges 2.

Zur Untersuchung der Ladung eines Fahrzeuges 2 wird dieses zum Eingang des Tunnels 3 bis zu einer Übergabeposition gefahren, an der die Vorderräder 17, 18 durch eine Anfahrsperre fixiert werden. Dort verläßt der Fahrer sein Fahrzeug. Der weitere Transport des Fahrzeuges erfolgt automatisch und wird von einem Systemoperator überwacht.

Unter den Vorderrädern 17, 18 befinden sich die Greifer 15, 16 der Wagen 11, 12. Sie werden motorisch etwas in die Höhe bewegt, bis die Vorderräder 17, 18 von der Lauffläche 8 abheben. Anschließend werden die Wagen 11, 12 in den Schienen 13, 14 motorisch verschoben, so daß die Ladung 1 vollständig vom Strahlenbündel 19 abgetastet und ein vollständiges Bild auf dem Sichtgerät 7 wiedergegeben wird. Bei dieser Abtastung rollen die auf der Lauffläche 8 verbliebenen Fahrzeugräder dort im Leerlauf ab.

Die Lauffläche 8 ist im Bereich des Strahlenbündels 19 mit einer Kunststoffschicht abgedeckt. Die Schienen 13, 14 besitzen Spalte für den Durchtritt des Strahlenbündels 19.

Nachdem das komplette Fahrzeug 2 das Strahlenbündel 19 durchfahren hat, werden die Wagen 11, 12 stillgesetzt. Die Hubmechanik bewegt die Greifer 15, 16 nach unten und das Fahrzeug ist für den Fahrer wieder freigegeben. In der Endposition werden die Greifer 15, 16 durch Öffnungen 20, 21 in der Lauffläche 8 hindurch bis zu einer unteren Endposition kurz oberhalb der Schienen 13, 14 abgesenkt. Ist diese Position erreicht, so fahren die Wagen 11, 12 zurück in die Übergabeposition und stehen für den Transport des nächsten Fahrzeuges bereit.

Die beiden Spalten in der Lauffläche 8, durch die die Hubmechanik herausragt, können aus Unfallschutzgründen im Ein- und Aussteigebereich durch Bleche abgedeckt sein, die durch die ankommende Hubmechanik mit Hilfe spezieller Mitnehmer zum Durchfahren zur Öffnung der Spalten entfernt werden können.

## Patentansprüche

1. Prüfanlage für die Ladung eines mit Rädern (17, 18) ausgestatteten Fahrzeuges (2) mit einem Strahler (4) für ein fächerförmiges Strahlenbündel (19) auf einer Seite und einer Zeile (5) von einzelnen Detektoren auf der anderen Seite einer Transportvorrichtung für das Fahrzeug (2), sowie mit einer Elektronik (6) zur Verarbeitung der Detektorsignale mit einem Sichtgerät (7) für die bildliche Wiedergabe der Ladung, bei der die Transportvorrichtung Hubwagen (11, 12) für die Fahrzeugräder (17, 18) aufweist, die das gesamte Fahrzeug (2) mit der Ladung mit angehobenen Rädern (17, 18) durch den Meßraum transportieren.

2. Prüfanlage nach Anspruch 1, bei der die Hubwagen (11, 12) unter der Lauffläche (8) für das Fahrzeug (2) in Kanälen (9, 10) motorisch längsverschiebbar geführt sind.

## Claims

1. Testing system for the load of a vehicle (2) which is equipped with wheels (17,18), with a radiation means (4) producing a fan-shaped beam (19) from one side and with a row of individual detectors (5) on the other side of a transport device for the vehicle (2), an electronic system (6) being provided for processing the detector signals with a visual display apparatus (7) for the visual presentation of the load, the transport device having elevating trucks (11,12) for the wheels (17,18) of the vehicle, which transport the entire vehicle (2) with the load and with raised wheels (17,18) through the measuring chamber.

2. Testing system in accordance with Claim 1, wherein the elevating trucks (11,12) are longitudinally displaceable by motor means in channels (9,10) under the floor (8) over which the vehicle (2) travels.

## Revendications

1. Installation de contrôle de la charge d'un véhicule (2) équipé de roues (17, 18), avec un émetteur de rayonnement (4), servant à produire un faisceau de rayons (19) en éventail, d'un côté et avec une rangée (5) de détecteurs individuels de l'autre côté d'un dispositif transporteur destiné au véhicule (2), ainsi qu'avec une électronique (6) servant à traiter les signaux de détecteur avec un appareil de visualisation (7) servant à donner une restitution sous forme d'image du chargement, installation dans laquelle le dispositif de transport présente des chariots de levage (11, 12), destinées aux roues de véhicule (17, 18), transportant l'ensemble du véhicule (2) avec le chargement dans l'espace de mesure les roues (17, 18) étant soulevées.

2. Installation de contrôle selon la revendication 1, dans laquelle les chariots de levage (11, 12) sont guidés déplaçables longitudinalement, de façon motorisée, dans des canaux (9, 10) sous la surface de roulement (8) destinée au véhicule (2).
